Europäisches Patentamt

European Patent Office

Office européen des brevets

(19)

(11) **EP 0 606 803 B1**

(12) **FASCICULE DE BREVET EUROPEEN**

(45) Date de publication et mention
de la délivrance du brevet:
**01.10.1997 Bulletin 1997/40**

(51) Int Cl.⁶: **G06F 11/08**, G06F 11/28

(21) Numéro de dépôt: **93403179.0**

(22) Date de dépôt: **27.12.1993**

(54) **Procédé de détection des erreurs d'exécution d'un logiciel**

Verfahren zur Erkennung von Ausführungsfehlern in einem Programm

Method for detecting program execution errors

(84) Etats contractants désignés:
AT BE CH DE DK ES FR GB GR IT LI LU NL PT SE

(30) Priorité: **31.12.1992 FR 9215989**

(43) Date de publication de la demande:
**20.07.1994 Bulletin 1994/29**

(73) Titulaire: **GEC ALSTHOM TRANSPORT SA**
**75016 Paris (FR)**

(72) Inventeurs:
• **Bres, Guillaume**
**F-92120 Montrouge (FR)**
• **Simon, Francois**
**F-91290 Arpajon (FR)**

(74) Mandataire: **Fournier, Michel et al**
**c/o ALCATEL ALSTHOM,**
**Département de Propriété Industrielle,**
**30, avenue Kléber**
**75116 Paris (FR)**

(56) Documents cités:
**EP-A- 0 483 437**          **US-A- 4 964 126**

• **IEEE TRANSACTIONS ON COMPUTERS vol. 37,**
**no. 2 , Février 1988 , NEW YORK US pages 160 -**
**174 AAMER MAHMOOD 'Concurrent Error**
**Detection Using Watchdog Processors - A**
**Survey'**

**Description**

La présente invention concerne un procédé de détection des erreurs d'exécution d'un logiciel et s'applique notamment, mais de manière non limitative, à la détection en cours de fonctionnement des erreurs d'exécution de logiciels industriels de gestion ou de contrôle de réseaux, tels que des réseaux ferroviaires, des réseaux de télécommunications, ou de logiciels d'aide au pilotage dans des avions par exemple.

De manière schématique, un logiciel peut être représenté par un ensemble d'instructions élémentaires constituant les sommets d'un graphe et reliées entre elles par des branchements constituant les arcs du graphe. Ces instructions peuvent être :

- des opérations (addition, soustraction, multiplication, division, ET logique, noté $\wedge$, OU logique, noté $\vee$, OU exclusif noté $\oplus$, etc...) mettant en jeu un opérateur, noté T, et plusieurs opérandes, deux par exemple notés x et y, les opérandes étant constitués soit de données d'entrée du logiciel considéré, soit de résultats obtenus par exécution d'autres instructions du logiciel ; l'opérateur T appliqué aux opérandes x et y met à jour le contenu d'une variable, notée r, en lui affectant la valeur xTy,
- des tests conditionnels du type "if EXPR then ... else ...", où EXPR est de manière générale une condition du type "x $\geq$ 0 ?" ou "x = constante ?",
- des instructions de branchements inconditionnels appelées instructions de destination, du type "goto" ou "stop".

Le modèle précédent permet de représenter schématiquement tous les types de logiciels écrits au moyen de langages séquentiels courants.

Selon le schéma de représentation précédent, chaque exécution d'un logiciel correspond à un parcours ou chemin particulier dans le graphe représentant le logiciel, ce chemin dépendant des résultats des opérations et de ceux des tests conditionnels en fonction des valeurs particulières prises par les variables au cours de l'exécution concernée.

En outre, chaque parcours autorisé dans le graphe, c'est-à-dire correspondant à une suite possible d'instructions reliées entre elles par des branchements, est appelé chemin licite.

En généralisant la présentation précédente, on peut remplacer chaque instruction d'opération par une suite d'instructions d'opération, cette suite étant dénommée bloc et présentant un unique point d'entrée et un unique point de sortie.

Pour qu'un chemin exécuté soit considéré comme sans erreurs, c'est-à-dire pour que son résultat soit considéré comme exact, il faut que les conditions suivantes soient réunies :

- la suite des instructions exécutées (chemin exécuté) correspond à un chemin licite dans le graphe, c'est-à-dire qu'aucune instruction n'a été ajoutée ou supprimée par rapport à ce qui était prévu à la compilation,
- pour les instructions de test, le choix de l'instruction suivante est correct en fonction du résultat du test exécuté, et pour les instructions de destination, l'instruction suivante est bien celle prévue (on dit alors que le chemin exécuté est correct),
- chaque instruction d'opération est effectuée en utilisant l'opérateur prévu (dans le cas contraire, on dit qu'il y a une erreur opératoire),
- les opérandes utilisés au sein des instructions d'opérations et de test sont ceux attendus (dans le cas contraire, on dit qu'il y a une erreur de dépendance).

Si le chemin exécuté n'est pas licite ou n'est pas correct, on dit qu'il y a une erreur de flot d'exécution.

Dans de nombreux cas pratiques, étant donné que la probabilité d'occurrence d'erreurs d'exécution n'est pas négligeable, on utilise une méthode dite de réplication, faisant appel au principe de la redondance. Au lieu d'implanter un seul logiciel au sein d'un système, on en implante R exemplaires identiques appelés répliques. Le résultat final d'une exécution des R répliques, auxquelles ont été fournies les mêmes données d'entrée, est sélectionné comme étant le résultat obtenu par un nombre prédéterminé de ces répliques, en général la majorité. Cette méthode de sélection est alors appelée vote majoritaire, et le résultat sélectionné par le vote est considéré comme exact.

La réplication peut également consister à exécuter R fois séquentiellement le logiciel, et à sélectionner le résultat considéré comme exact de la même manière que précédemment, une fois les R exécutions terminées.

La méthode qui vient d'être exposée, appelée réplication, est fiable, c'est-à-dire qu'elle permet de poursuivre l'exécution même si une ou plusieurs répliques sont défaillantes, à condition que la majorité des répliques ne soit pas affectée d'une même erreur.

Si la majorité des répliques est affectée d'une même erreur (on est alors en présence d'une erreur dite générique), cette erreur n'est pas détectable. On dit pour cela que la réplication n'est pas une méthode sécuritaire.

Les erreurs génériques peuvent être dues par exemple à un défaut du matériel utilisé, à une erreur du compilateur lors de la réplication, à l'influence d'un rayonnement électromagnétique, etc.... On comprend bien que le fait qu'une telle erreur soit indétectable est préjudiciable au bon fonctionnement de l'installation et peut même s'avérer dangereux lorsque le logiciel considéré est un logiciel de contrôle du trafic ferroviaire ou d'aide au pilotage par exemple.

On connaît par ailleurs une méthode sécuritaire, appelée méthode par processeur codé ou plus simplement processeur codé, qui consiste à coder, au sein du logiciel à contrôler lui-même, les variables intervenant dans chaque instruction par une transformation prédéterminée. Si l'instruction est exécutée correctement, le résultat obtenu après exécution présente une cohérence attendue,

c'est-à-dire qu'il peut être décodé au moyen d'une fonction prédéterminée et prévisible. De plus, le codage effectué est tel que seule l'instruction prévue pour être la suivante est capable de décoder le résultat obtenu et par conséquent de permettre la poursuite de l'exécution.

En pratique, le codage des variables effectué permet d'obtenir après exécution de chaque instruction un code numérique d'où l'on peut extraire notamment :

- le résultat correspondant à l'exécution de l'instruction sur les variables non codées,
- une valeur numérique représentant l'opération qui a été effectuée par l'instruction concernée ainsi que le numéro d'ordre de cette instruction dans la suite des instructions exécutées,
- une valeur numérique destinée à vérifier la cohérence du résultat obtenu.

Le processeur codé est donc complexe et surtout coûteux en temps de calcul, car le codage qui y est effectué allonge sensiblement la durée d'exécution de chaque instruction, ce qui pénalise l'exécution du logiciel à contrôler.

De plus, le processeur codé n'est pas une méthode fiable, puisqu'il n'est pas possible de poursuivre l'exécution une fois qu'une erreur a été détectée.

Le but de la présente invention est donc de mettre au point un procédé de détection des erreurs d'exécution d'un logiciel à la fois fiable et sécuritaire.

La présente invention propose à cet effet un procédé de détection des erreurs d'exécution d'un logiciel répliqué, c'est-à-dire dont plusieurs répliques identiques, auxquelles sont fournies les mêmes données d'entrée, sont exécutées en parallèle ou séquentiellement, ledit logiciel comprenant des instructions reliées entre elles par des branchements et constituées :

- soit d'opérations mettant en jeu un opérateur, dit simple, agissant sur des opérandes, dits simples, afin de mettre à jour le contenu d'une variable, lesdits opérandes étant constitués soit de données d'entrée, soit de résultats obtenus par exécution d'autres instructions,
- soit de tests conditionnels dont le résultat sert à déterminer l'instruction suivante à exécuter,
- soit d'indications de destination donnant directement l'instruction suivante à exécuter,
  ledit procédé étant caractérisé en ce que chacune desdites instructions d'opération, au sein de chaque réplique, est remplacée par plusieurs instructions dites de détection d'erreur permettant d'effectuer successivement :
- le codage préalable des opérandes mis en jeu dans ladite instruction d'opération et constitués de données d'entrée, au moyen d'une injection dite de codage spécifique de ladite instruction d'opération, pour obtenir des données d'entrée dites codées images desdites données d'entrée simples par ladite injection, chaque injection de codage, associée à l'une desdites répliques et à une instruction d'opération donnée au sein de cette réplique, étant distincte des injections de codage associées à toutes les autres instructions d'opération au sein de toutes les autres répliques,
- la transformation dudit opérateur simple associé à ladite instruction d'opération, de sorte que l'opérateur appliqué aux opérandes, codés, de ladite instruction résulte de la transformation dudit opérateur simple, les transformations correspondant à des opérateurs identiques au sein des différentes répliques étant deux à deux distinctes,
- le transcodage du résultat obtenu par application dudit opérateur transformé auxdits opérandes codés, pour obtenir un résultat dit transcodé sous la forme d'un opérande codé au moyen du codage spécifique de l'instruction d'opération destinée à utiliser ledit résultat, ledit transcodage étant effectué au moyen d'une transformation dite de transcodage, chaque transformation de transcodage, associée à l'une desdites répliques et à une instruction d'opération donnée au sein de cette réplique étant distincte des transformations de transcodage associées à toutes les autres instructions d'opération au sein de toutes les autres répliques,
  ledit procédé étant en outre caractérisé en ce qu'il comprend une opération finale de décodage du résultat, dit final, obtenu en fin d'exécution de chaque réplique, au moyen de l'inverse de l'injection dite de décodage spécifique définie ci-dessus, chaque injection de décodage, spécifique de l'une desdites répliques, étant distincte des injections de décodage des autres répliques, et en ce qu'il indique qu'une erreur d'exécution s'est produite si, pour certaines desdites répliques, ledit résultat final ne peut être décodé au moyen de ladite injection inverse correspondante, et si, parmi les résultats finaux décodés des autres répliques, il n'en existe pas un, éventuellement appelé alors résultat final sélectionné, qui est obtenu par un nombre minimum prédéterminé desdites autres répliques.

Grâce à l'invention, les différentes répliques sont dotées de comportements différents lors de l'activation d'une même erreur, ce qui permet de détecter l'occurrence d'une erreur générique. En effet, une même information est élaborée plusieurs fois sous des formes différentes ou approchées. Ainsi, une incohérence entre les différentes formes d'une même information révèle une erreur dans son processus d'élaboration.

Le procédé selon l'invention est à la fois sécuritaire et fiable, puisqu'il utilise un principe de codage permettant de vérifier la cohérence de tout résultat obtenu, et donc de tenir compte des erreurs génériques éventuelles, et puisque même si une majorité des répliques est affectée d'une erreur générique, ces dernières ne sont pas prises en compte pour sélectionner le résultat final considéré comme exact.

La fonction de transformation de chaque opérateur peut être composée avec la fonction de transcodage de l'opération précédente pour constituer une seule fonction. Ceci permet de diminuer la durée d'exécution de ces deux transformations.

De manière avantageuse, le procédé selon l'invention peut consister en outre à :

- déterminer, lors de la compilation de chaque réplique, une donnée de référence, appelée signature de référence, pour chaque parcours autorisé au sein de cette réplique, par combinaison de constantes numériques appelées identifiants élémentaires prédéterminés et associés à chaque instruction de test et à chaque instruction de destination, les signatures de référence étant mises en mémoire,
- calculer, au moyen d'instructions supplémentaires insérées au sein de chaque réplique, la valeur d'une variable, appelée signature courante, représentative de la suite des instructions de test et de destination effectuées lors de l'exécution, par combinaison de valeurs numériques appelées identifiants élémentaires d'exécution et associées à chacune des instructions de destination et de test exécutées, les combinaisons effectuées au sein d'une même réplique pour la détermination et pour le calcul respectivement des signatures de référence et courante étant identiques, et distinctes deux à deux d'une réplique à l'autre au moyen d'un paramétrage adapté.

Lorsqu'il existe un résultat final sélectionné comme étant obtenu par un nombre prédéterminé des répliques restantes, les signatures courantes des répliques ayant fourni ce résultat sont comparées aux signatures de référence correspondantes, et si elles ne sont pas toutes égales à une signature de référence de la réplique correspondante, le procédé selon l'invention consiste à indiquer qu'une erreur d'exécution s'est produite.

Le perfectionnement précédent offre une sécurité supplémentaire qui permet d'accroître la détectabilité d'une erreur générique. En effet, l'utilisation d'un paramétrage différent pour le calcul de signature de chaque réplique permet de détecter la présence d'une erreur générique qui n'aurait pu être détectée par un simple codage-décodage.

De manière très avantageuse, pour une instruction d'opération suivant une instruction de test, la transformation associée à l'opérateur correspondant est fonction de la différence entre les signatures courante et de référence partielles du parcours exécuté jusqu'à cette instruction de test.

Selon un mode de mise en oeuvre possible, les injections de codage sont des fonctions affines dont l'ordonnée à l'origine et la pente sont différentes d'une réplique à l'autre. Ce mode de mise en oeuvre présente l'avantage d'être particulièrement simple, et notamment d'être beaucoup plus simple que la méthode de codage utilisée dans les processeurs codés.

Il n'est en effet pas nécessaire, selon l'invention, d'avoir recours à un codage aussi complexe que celui du processeur codé, puisque l'on utilise en parallèle la réplication. Ainsi l'on peut se servir d'un codage qui à lui seul serait insuffisant pour permettre la détection d'erreur au sein d'un processeur codé, mais qui en combinaison avec la réplication permet d'obtenir une probabilité de détection d'erreurs voisine de celle obtenue avec les processeurs codés connus.

Lorsque l'opération est une addition ou une soustraction, l'opérateur transformé correspondant est respectivement une addition ou une soustraction, c'est-à-dire que la transformation utilisée pour transformer l'opérateur est l'identité. Ici encore, le mode de codage est particulièrement simple.

Le procédé selon l'invention est donc moins complexe et moins coûteux en temps de calcul que le processeur codé.

Pour déterminer ou calculer les signatures de référence ou courantes, on additionne les représentations binaires des identifiants élémentaires en les ayant préalablement multipliées chacune par une puissance de deux choisie arbitrairement, cette puissance de deux étant fonction du numéro d'ordre de l'instruction correspondante et les ensembles de puissances de deux utilisés au sein de chaque réplique étant deux à deux distincts.

L'identifiant élémentaire d'exécution d'une instruction de test est fonction de la variable faisant l'objet de la condition de cette instruction de test et de constantes prédéterminées, de sorte que, si l'instruction à laquelle correspond l'identifiant est exécutée correctement, il est égal à l'identifiant élémentaire prédéterminé affecté à cette instruction.

La variable faisant l'objet de la condition de l'instruction de test peut être codée au moyen d'un codage spécifique fonction de la variable prévue pour le test avant d'être utilisée pour calculer l'identifiant élémentaire d'exécution de l'instruction correspondante de sorte que, si la variable effectivement utilisée lors du test n'est pas celle attendue, l'identifiant élémentaire d'exécution de l'instruction de test correspondante est altéré et l'erreur est donc détectable.

Enfin, les identifiants élémentaires d'exécution des instructions de destination sont calculés par une instruction supplémentaire suivant chaque instruction de destination et affectant à l'identifiant élémentaire d'exécution une constante prédéterminée égale à l'identifiant élémentaire prédéterminé correspondant.

D'autres caractéristiques et avantages du procédé selon la présente invention apparaîtront dans la description suivante d'un mode de mise en oeuvre particulier de ce procédé, donné à titre illustratif et nullement limitatif.

Dans tout ce qui suit, on prendra l'exemple d'un logiciel simple écrit ci-dessous. Ce logiciel comprend tous les types d'instructions mentionnés plus haut.

```
      r₁ = x₁T₁y₁              1
      ...
label r_i = x_iT_iy_i         i
      ...
      r_j = x_jT_jy_j          j
      if x_k ≥ 0 then          k
         goto label
      else
         r₁ = x₁T₁y₁           l
         ...
      endif
      ...
      stop
```

Les variables notées r sont les résultats des instructions d'opération, numérotées 1, i, j et l. Les opérandes de ces opérations sont notés x et y, et les opérateurs, supposés binaires pour des raisons de clarté, sont notés T. Les indices représentent le numéro de l'opération ou de l'instruction considérée.

Le logiciel écrit ci-dessus est répliqué au sein du système dans lequel il est implanté, de sorte que ce système comporte R répliques qui sont exécutées en parallèle par R processeurs, et auxquelles sont fournies les mêmes données d'entrée. Selon un autre modèle d'implantation, la réplication peut prendre la forme de R exécutions séquentielles du logiciel concerné.

En général, du fait de la fiabilité apportée par la réplication du logiciel, seule une détection des erreurs opératoires ou de dépendance suffit. On commencera donc par présenter le procédé permettant de détecter les erreurs d'exécution en contrôlant les opérations effectuées et les opérandes utilisés au cours de ces opérations.

On décrira ensuite un perfectionnement du procédé selon l'invention dans lequel on contrôle en outre le flot d'exécution afin de détecter les erreurs d'exécution.

Le procédé selon l'invention repose en premier lieu sur le principe du codage des opérateurs et des opérandes intervenant dans l'exécution du logiciel à contrôler (et de ses répliques). Selon l'invention, des instructions dites de détection d'erreur remplacent les instructions d'opération. Ces instructions sont de plusieurs types :

- des instructions de codage des opérandes constitués de données d'entrée et mis en jeu au sein de chaque instruction d'opération, ce codage étant spécifique à l'instruction d'opération considérée,
- des instructions de transformation des opérateurs utilisés dans chaque instruction d'opération,
- des instructions dites de transcodage, pour coder le résultat obtenu par application d'un opérateur transformé à des opérandes codés au moyen du codage spécifique à une autre instruction d'opération ultérieure devant utiliser ce résultat,
- une instruction finale de décodage du résultat final codé de l'exécution.

Les instructions précédentes font intervenir des fonctions permettant d'effectuer les codages, transcodages, transformations, et décodage final nécessaires.

Ainsi par exemple, les instructions de codage utilisent des injections, afin qu'il soit possible, en appliquant l'injection inverse, de retrouver l'opérande initial.

Les instructions de transformation appliquent aux opérandes modifiés un opérateur transformé, fonction de l'opérateur prévu au sein du logiciel initial.

Les fonctions de transcodage sont en pratique obtenues par composition d'une fonction de décodage dépendant du codage spécifique de l'opération ayant produit le résultat considéré, et d'une fonction de codage spécifique à l'opération destinée à utiliser ce résultat.

Enfin, l'instruction de décodage applique au résultat final de l'exécution ainsi effectuée l'inverse d'une injection qui doit permettre de retrouver, si aucune erreur ne s'est produite, le résultat qui aurait été obtenu en appliquant les opérateurs initiaux aux opérandes initiaux. Ainsi, l'injection inverse de décodage utilisée dépend des opérateurs prévus, de sorte que si un opérateur erroné est transformé puis appliqué aux opérandes codés (erreur opératoire), le décodage du résultat final n'est pas possible, ce qui permet de déduire que ce résultat n'est pas exact.

Le schéma général du codage-transcodage-décodage est alors le suivant, pour un logiciel très simplifié constitué de deux instructions d'opération dont les opérateurs sont respectivement $g_1$ puis $g_2$, dont l'entrée est x et la sortie (résultat final) y tel que $y = g_2 o g_1(x)$, où o représente la composition des opérateurs:

$$x \longrightarrow \boxed{u} \xrightarrow{X1} \boxed{G1} \xrightarrow{Y1} \boxed{T1} \xrightarrow{X2} \boxed{G2} \xrightarrow{Y2} \boxed{v} \longrightarrow y$$

L'injection u apporte à x dans $X_1 = u(x)$ une cohérence informationnelle (appartenance à un code), et $v^{-1}$, inverse de l'injection u, peut extraire y de $Y_2$ si $Y_2$ possède la cohérence attendue. $G_1$ et $G_2$ sont des fonctions des opérateurs $g_1$ et $g_2$ respectivement, et $T_1$ est une transformation de transcodage permettant de transformer $Y_1$, possédant la cohérence correspondant à $g_1$, c'est-à-dire codé au moyen du codage spécifique à l'opération dont l'opérateur est $g_1$, en $X_2$, possédant la cohérence correspondant à $g_2$. $G_1$, $G_2$ et $T_1$ sont telles que l'on peut extraire de $Y_2$ le résultat $y = g_2 o g_1(x)$. Si aucune erreur opératoire ou de dépendance ne s'est produite, $G_1$ transforme la cohérence de $X_1$ en une cohérence pour $Y_1$, $T_1$ la cohérence de $Y_1$ en une cohérence pour $X_2$ et $G_2$ la cohérence de $X_2$ en une cohérence pour $Y_2$.

On peut comparer le codage-transcodage-décodage précédent à un processus de traduction : u traduit x d'une langue l à une langue $L_1$ parlée par $G_1$, $T_1$ traduit $Y_1$ de $L_1$ à une langue $L_2$ parlée par $G_2$, et $v^{-1}$ traduit $Y_2$ de $L_2$ à la langue l qui est celle du résultat final décodé. Si une erreur de dépendance ou une erreur opératoire se produit, on effectue une traduction dans une langue l' qui n'est pas celle attendue. Le résultat final ne sera donc pas dans la langue attendue, c'est-à-dire n'aura pas la cohérence attendue, ce qui permettra de signaler une erreur au niveau de la réplique concernée.

En pratique, il est possible d'effectuer en même temps les opérations de transformation de l'opérateur et de transcodage en remplaçant les deux instructions de détection d'erreur correspondantes par une seule, cette instruction unique étant constituée d'une fonction égale à la composée de la fonction de transcodage par celle de transformation de l'opérateur. Ainsi, par exemple, la fonction de transformation de l'opérateur d'une instruction effectue également et simultanément le transcodage du résultat d'une instruction précédente, soit le transcodage associé à l'instruction précédente, si l'un de ses opérandes est égal à ce résultat. On a donc ainsi une succession d'instructions d'opérations (bloc) transformant automatiquement le résultat de l'opération précédente dans un langage compréhensible par l'opération suivante, et l'on procède au décodage uniquement à la fin de l'exécution, lorsque l'on souhaite connaître le résultat final de cette dernière.

Par conséquent, dans ce dernier cas, tout opérateur transformé maintient par son exécution correcte une cohérence, de sorte que la variable qu'il produit est consommable par son "successeur".

Pour prendre un exemple de mise en oeuvre concret, une instruction de la forme $z = x + y$ est remplacée par les instructions suivantes (l'indice r représente le paramétrage en fonction de la réplique considérée) :

$$X_r = \lambda_r x + \mu_r$$

$$Y_r = \lambda_r y + \nu_r$$

$$Z_r = X_r + Y_r$$

$$z = (Z_r - \mu_r - \nu_r)/\lambda_r,$$

où $\lambda_r$, $\mu_r$, et $\nu_r$ sont des constantes choisies arbitrairement. Dans l'exemple précédent, les injections de codage sont des fonctions affines des opérandes, la transformation de l'opérateur est l'identité, puisque l'on fait la somme des opérandes codés, et le décodage est effectué simplement par résolution de l'équation faisant intervenir z et $Z_r$. Le transcodage permet de faire passer directement de $Z_r$ à $Z'_r$ compréhensible par l'instruction d'opération ultérieure devant en principe utiliser z.

Le tableau ci-dessous montre un exemple possible des codages ($u_r$), transformations des opérateurs ($G_r$), et enfin décodages ($v_r$) utilisés en relation avec les opérations d'addition, de soustraction, de multiplication et de division (l'indice r correspond au numéro de la réplique considérée).

| Opération | $u_r$ | $G_r$ | $v_r$ |
|---|---|---|---|
| z = x+y | $X_r = \lambda_r x + \mu_r$ <br><br> $Yr = \delta_r y + \nu_r$ | $Z_r = \dfrac{\alpha_r}{\lambda_r} X_r + \dfrac{\alpha_r}{\delta_r} Y_r - \dfrac{\alpha_r \mu_r}{\lambda_r} - \dfrac{\alpha_r \nu_r}{\delta_r} + \beta_r$ | $Z_r = \alpha_r z + \beta_r$ |
| z = x-y | $X_r = \lambda_r x + \mu_r$ <br><br> $Yr = \delta_r y + \nu_r$ | $Z_r = \dfrac{\alpha_r}{\lambda_r} X_r - \dfrac{\alpha_r}{\delta_r} Y_r - \dfrac{\alpha_r \mu_r}{\lambda_r} - \dfrac{\alpha_r \nu_r}{\delta_r} + \beta_r$ | $Z_r = \alpha_r z + \beta_r$ |
| z = x.y | $X_r = \lambda_r x + \mu_r$ <br><br> $Yr = \delta_r y + \nu_r$ | $Z_r = \dfrac{\alpha_r}{\lambda_r \delta_r} X_r Y_r - \dfrac{\alpha_r \nu_r}{\lambda_r \delta_r} X_r - \dfrac{\alpha_r \mu_r}{\lambda_r \delta_r} Y_r + \dfrac{\alpha_r \mu_r \nu_r}{\lambda_r \delta_r} + \beta_r$ | $Z_r = \alpha_r z + \beta_r$ |
| z = x/y | $X_r = \lambda_r x + \mu_r$ <br><br> $Yr = \delta_r y + \nu_r$ | $Z_r = \dfrac{\alpha_r \delta_r X_r}{\lambda_r Y_r - \lambda_r \nu_r} - \dfrac{\beta_r Y_r}{Y_r - \nu_r} - \dfrac{\alpha_r \delta_r \mu_r + \nu_r \beta_r}{\lambda_r Y_r - \lambda_r \nu_r}$ | $Z_r = \alpha_r z + \beta_r$ |

On comprend bien d'après le tableau précédent que les codages, transformations et décodages effectués selon le procédé de l'invention sont très simples, et donc peu coûteux en temps de calcul. Ils pénalisent donc peu l'exécution du logiciel à contrôler.

Cette grande simplicité est rendue possible par le fait que le codage-transcodage-décodage des opérations est couplé avec la méthode de réplication qui permet d'utiliser pour chaque réplique et pour chaque instruction des fonctions (injections de codage et de décodage, transformations) distinctes.

En effet, puisque l'on se trouve dans un contexte répliqué, il faut effectuer une détection d'erreur qui n'est pas sensible au point faible de la réplication, c'est-à-dire les erreurs génériques. Ceci est possible en définissant, pour chaque instruction d'opération, un ensemble de fonctions $u_r$, $G_r$ et $v_r$ paramétré en fonction de la réplique concernée.

Chaque fonction de codage, de transcodage et de transformation d'opérateur est distincte des fonctions associées aux instructions correspondantes et à toutes les autres instructions au sein de toute les autres répliques. Ainsi, lorsqu'une même faute affecte les différentes répliques, ces dernières présentent des comportements erronés distincts, ce qui permet d'éviter de considérer comme exact un résultat qui ne l'est pas.

Grâce à l'invention, même si une même erreur affecte la majorité des répliques (ou un nombre prédéterminé d'entre elles lorsque le vote ne se fait pas à la majorité), elle a une probabilité très faible de produire un résultat final cohérent (c'est-à-dire qui peut être décodé par une injection inverse préétablie) pour chacune de ces répliques. En éliminant les résultats fournis par les répliques pour lesquelles une incohérence a été détectée, et en sélectionnant comme résultat "exact" celui qui est obtenu par la majorité ou par un nombre prédéterminé des répliques restantes, on a donc mis au point un procédé fiable et sécuritaire qui permet d'indiquer qu'une erreur d'exécution s'est produite lorsque, une fois les répliques ayant fourni un résultat incohérent éliminées, aucun résultat n'est obtenu par un nombre prédéterminé des répliques restantes.

Selon un perfectionnement important de la présente invention, on effectue, en plus du codage-transcodage-décodage présenté ci-dessus, un calcul de signature pour vérifier que le chemin emprunté dans le graphe est un chemin correct, c'est-à-dire que le chemin emprunté après chaque instruction de test est cohérent avec le résultat du test effectué.

Pour cela, dans un premier temps, on insère dans le logiciel tel que présenté ci-dessus des instructions spécifiques, dites supplémentaires, permettant de calculer une variable numérique, appelée identifiant élémentaire d'exécution, représentant chaque instruction de test ou de destination effectivement exécutée, après exécution de cette dernière. Cette méthode n'introduit pas de branchement supplémentaire au sein du logiciel.

Plus précisément, lors de la compilation du logiciel précédent, chaque instruction de test ou de destination est associée à une donnée numérique (un nombre entier par exemple) appelée identifiant élémentaire prédéterminé.

Ainsi, l'instruction k du logiciel précédemment décrit est associée à deux identifiants notés $I_{then,p}$ et $I_{else,p}$, le premier de ces identifiants correspondant à une réponse positive au test "$x_k \geq 0$ ?", et le second à une réponse négative.

En outre, les instructions de destination "goto" et "stop" sont également associées à des identifiants notés respectivement $I_{goto}$ et $I_{stop}$.

Les valeurs de tous les identifiants élémentaires prédéterminés sont en général choisies arbitrairement, chaque type d'instruction étant associé à un identifiant élémentaire distinct.

Pour détecter d'éventuelles erreurs, il faut pouvoir effectuer une comparaison entre des données de référence et des variables calculées lors de l'exécution. Les identifiants élémentaires d'exécution doivent donc être identiques, s'il n'y a pas d'erreur d'exécution, à ceux définis lors de la compilation.

Les identifiants élémentaires d'exécution des instructions de destination sont déterminés arbitrairement : on leur affecte, dans une instruction supplémentaire suivant l'instruction de destination considérée, la valeur de l'identifiant élémentaire prédéterminé de la compilation pour l'instruction correspondante.

Pour ce qui est du calcul des identifiants élémentaires d'exécution des instructions de test, le procédé selon l'invention propose une méthode simple que l'on va exposer à présent.

N'importe quel test peut se ramener à une ou plusieurs conditions de la forme "$x \geq 0$ ?" ou "$x = c$ ?", où c est une constante et x la variable à tester. Le raisonnement est identique pour les entiers ou pour les décimaux flottants. On présentera donc la méthode sur des entiers, par souci de clarté.

Dans le cas où la condition est "$x \geq 0$?", si l'on pose $X_r = a_r x + b_r$, en choisissant $a_r > b_r \geq 0$, Xr est toujours du même signe que x.

On sait par ailleurs que si $x < 0$, la représentation binaire en complément à deux de $X_r$ est $2^m + a_r x + b_r$ (où m est le nombre de bits disponibles). Par conséquent, en prenant la représentation binaire non signée de $X_r$, notée (unsgd) $X_r$ et en notant mod la division entière, on a :

$$(\text{unsgd})X_r \bmod a_r = b_r \bmod a_r \iff X \geq 0$$

$$(\text{unsgd})X_r \bmod a_r = (2^m + b_r) \bmod a_r \iff x < 0.$$

Si l'on pose à la compilation $I_{then,p}$ égal à A et $I_{else,p}$ égal à B, A et B étant des constantes arbitrairement choisies, et si l'on calcule les identifiants correspondants à l'exécution (notés respectivement $I_{then,ex}$ et $I_{else,ex}$) selon les formules :

$$I_{then,ex} = ((\text{unsgd})X_r \bmod a_r) \oplus (b_r \bmod a_r) \oplus A$$

$$I_{else,ex} = ((\text{unsgd})X_r \bmod a_r) \oplus ((2^m + b_r) \bmod a_r) \oplus B,$$

les identifiants élémentaires d'exécution sont bien égaux aux identifiants élémentaires prédéterminés si le chemin exécuté est correct et si l'on a pris soin de respecter la condition : $(2^m + b_r) \bmod a_r \neq b_r \bmod a_r$.

En effet, dans le cas du logiciel pris comme exemple, si la réponse au test "$x_k \geq 0$ ?" est positive (c'est-à-dire que $x_k$ est positif ou nul) et que le logiciel exécute ensuite l'instruction 1, l'identifiant calculé et pris en compte dans la signature courante n'est pas celui attendu. On détecte ainsi une erreur de branchement, c'est-à-dire que le chemin exécuté, bien que licite, n'est pas correct.

Par ailleurs, dans le cas où la condition à vérifier est "$x = c$ ?", on pose $C_r = c_{1r}c + c_{2r}$. On suppose par ailleurs que $X_r$-$C_r$ est codé au moyen de constantes $a'_r$ et $b'_r$ telles que $a'_r > b'_r \geq 0$, de sorte que $X_r$-$C_r$ est du même signe que x-c.

De même que précédemment, on pose à la compilation $I_{then,p}$ égal à A et $I_{else,p}$ égal à B, et l'on calcule $I_{then,ex}$ et $I_{else,ex}$ selon les formules suivantes :

$$I_{then,ex} = X_r \oplus C_r \oplus A$$

$$I_{else,ex} = (((unsgd)(X_r - C_r) \bmod a'_r) \oplus ((unsgd)(C_r - X_r) \bmod a'_r)) \oplus ((b'_r \bmod a'_r) + ((2^m + b'_r) \bmod a'_r)) \oplus B.$$

Dans tous les cas, si la condition :

$$C_r \neq (b'_r \bmod a'_r) + ((2^m + b'_r) \bmod a'_r)$$

est vérifiée, l'expression utilisée pour calculer l'identifiant élémentaire d'exécution de l'instruction de test donne un résultat qui indique si la branche suivie lors de l'exécution est cohérente avec le résultat du test de l'instruction.

La méthode précédente de détermination des identifiants élémentaires d'exécution, utilisant des variables codées, permet de détecter non seulement des erreurs de branchement, mais également des erreurs sur la variable de test effectivement utilisée. Ainsi, l'utilisation d'une variable qui n'est pas codée au moyen d'un codage attendu altère de manière détectable l'identifiant élémentaire d'exécution correspondant.

Toujours selon l'invention, on procède, dans un deuxième temps, à l'aide des identifiants élémentaires d'exécution calculés comme indiqué précédemment, au calcul d'une variable, appelée signature courante du chemin exécuté. La signature courante est un nombre entier représentatif du chemin exécuté. Cette signature courante, notée $Sc_r$, est obtenue, selon l'invention, en faisant la somme bit à bit et modulo 2 des représentations binaires des identifiants élémentaires d'exécution calculés.

Toutefois, une simple somme entraîne une perte d'informations importante, puisqu'elle compacte l'information. Par conséquent, de nombreux chemins exécutés risquent d'avoir la même signature courante, ce qui ne permet pas de détecter les erreurs d'exécution de manière fiable.

La présente invention propose donc en outre de multiplier préalablement la représentation binaire de chaque identifiant élémentaire d'exécution par une puissance de deux, ce qui revient à effectuer un décalage des bits de cette dernière. On choisit donc une suite arbitraire d'entiers naturels paramétrée en fonction de la réplique considérée ($d_r$ $[i])_{i=1,N}$ (r représente la réplique), et si l'on note $I_i$ (i variant de 1 à N) les identifiants élémentaires d'exécution des instructions de destination ou de test d'un chemin exécuté, ce chemin comptant N instructions, on a :

$$Sc_r = \bigoplus_{i=1}^{N} 2^{d_r[i]} I_i.$$

En pratique, on peut éventuellement munir la signature courante d'un "compteur" incrémenté de 1 après chaque instruction exécutée. Ceci permet de connaître le numéro d'ordre de chaque instruction exécutée afin d'affecter à l'identifiant élémentaire d'exécution de cette instruction le décalage correspondant. Après chaque instruction exécutée, la valeur de $Sc_r$ est modifiée en lui ajoutant l'identifiant de cette instruction multiplié par la puissance de deux correspondante et par une puissance de deux constante, notée $2^D$, qui permet de séparer dans la représentation binaire de la signature courante calculée la partie correspondant à la signature courante de la partie compteur. On a donc en fait, à la fin de l'exécution :

$$Sc_r = N \oplus \bigoplus_{i=1}^{N} 2^{d_r[i]+D} I_i.$$

Il n'est toutefois pas essentiel d'insérer le compteur au sein de la signature courante. Toute autre méthode de comptage des instructions exécutées peut être employée.

On va maintenant décrire en détail un exemple d'instructions supplémentaires permettant la mise en oeuvre selon le procédé de l'invention, du calcul de signature.

Une instruction de destination est simplement suivie de l'instruction :

$$Sc_r = (1 + Sc_r) \oplus 2^{dr[Scr \wedge Mcpt]+D} I_{dest}$$

où Mcpt est tel que combiné par un ET logique à $Sc_r$, il permet d'extraire seulement la partie compteur de $Sc_r$, et où $I_{dest}$ est l'identifiant élémentaire prédéterminé de l'instruction de destination correspondante.

Dans le cas d'une instruction de test du type "x $\geq$ 0 ?", l'instruction "then" est suivie de l'instruction :

$$Sc_r = (1 + Sc_r) \oplus 2^{dr[Scr \wedge Mcpt]+D}I_{then,ex},$$

et l'instruction "else" est suivie de l'instruction :

$$Sc_r = (1 + Sc_r) \oplus 2^{dr[Scr \wedge Mcpt]+D}I_{else,ex}.$$

Les deux instructions supplémentaires précédentes sont adaptées simplement en remplaçant les identifiants par ceux décrits plus haut dans le cas où le test est du type "x = c ?".

D'après ce qui précède, le logiciel pris comme exemple peut être modifié de la manière suivante pour permettre le calcul de la signature :

```
        Sc_r = 0
        r_1 = x_1t_1y_1
        ...
label   r_i = x_it_iy_i
        ...
        r_j = x_jt_jy_j
        if x_k ≥ 0 then
        Sc_r = (1 + Sc_r) ⊕ 2^dr[Scr∧Mcpt]+DI_then,ex
           goto label
           Sc_r = (1 + Sc_r) ⊕ 2^dr[Scr∧Mcpt]+DI_goto
        else
        Sc_r = (1 + Sc_r) ⊕ 2^dr[Scr∧Mcpt]+DI_else,ex
           r_1 = x_1t_1y_1
           ...
        endif
        ...
        stop
```

Lors de la compilation, on effectue exactement de la même manière le calcul des signatures de référence de chaque chemin licite dans le logiciel à contrôler en remplaçant les instructions de calcul des identifiants élémentaires d'exécution par des instructions d'affectation des identifiants élémentaires prédéterminés.

Si le chemin suivi dans le graphe lors de l'exécution est correct, la signature courante $Sc_r$ est égale à l'une des signatures de référence déterminées lors de la compilation. Sinon, $Sc_r$ n'est égale à aucune des signatures de référence.

En choisissant une suite $(d_r[i])_{i=1,N}$ distincte pour chaque réplique, on paramètre le calcul de signature. On profite ainsi du contexte répliqué en utilisant un mode de calcul différent sur chaque réplique. Ceci a pour effet de changer d'une réplique à l'autre l'ensemble des parcours possédant une même signature. Une erreur générique ne devient donc indétectable que si, quelle que soit la réplique, la signature courante correspondante $Sc_r$ appartient à l'ensemble des signatures de référence pour cette réplique.

Afin de détecter une erreur après l'exécution des R répliques et selon le procédé de l'invention perfectionné par le calcul de signature exposé précédemment, on compare les signatures courantes des répliques ayant fourni le résultat final sélectionné (c'est-à-dire obtenu par un nombre prédéterminé des répliques ayant fourni un résultat cohérent) aux signatures de référence correspondantes pour chaque réplique. Si toutes ces signatures courantes sont égales à l'une des signatures de référence pour la réplique correspondante, le résultat final sélectionné est considéré comme exact. Dans le cas contraire, une erreur est indiquée.

Bien que le calcul de signature tel que décrit ci-dessus, associé au codage-transcodage-décodage selon l'invention, soit suffisant dans la plupart des cas pour détecter les erreurs d'exécution, il peut arriver que, au niveau d'un branchement conditionnel (en sortie d'une instruction de test), la signature courante soit correctement mise à jour en fonction de l'identifiant correspondant au résultat du test effectué, mais qu'en pratique, l'autre branche soit exécutée. C'est pourquoi, selon l'invention, on peut en outre faire dépendre la transformation de l'opérateur de l'instruction suivant immédiatement un branchement conditionnel de la signature courante et partielle du chemin exécuté jusque là. Ceci permet de contrôler la concordance de la signature représentative d'un chemin avec le chemin effectivement parcouru.

D'après ce qui a été décrit précédemment, toute instruction d'opération produit, si l'on utilise des fonctions $u_r$, $v_r$ et $G_r$ du type de celles indiquées dans le tableau précédent, un résultat codé $Z_r$ de la forme :

$$Z_r = \alpha_r z + \beta_r.$$

L'instruction d'opération devant utiliser z l'utilise, comme on l'a vu, sous la forme codée $Z'_r$ suivante (le passage de $Z_r$ à $Z'_r$ est le transcodage) :

$$Z'_r = \alpha'_r z + \beta'_r.$$

On a donc :

$$Z'_r = \frac{\alpha'_r}{\alpha_r} Zr + \beta'_r - \frac{\alpha'_r \beta_r}{\alpha_r}$$

Si l'on note $Sc,p_r$ et $Sréf,p_r$ respectivement les signatures partielles courante et de référence du chemin effectivement exécuté et du chemin prévu ($Sréf,p_r$ est connue au moment de la compilation), on modifie la fonction permettant d'obtenir $Z'_r$ de sorte que l'on a :

$$Z'_r = \left( \frac{\alpha'_r}{\alpha_r} + S_{réf,p_r} - S_{c,p_r} \right) Z_r + \beta'_r - \frac{\alpha'_r \beta_r}{\alpha_r}.$$

Ainsi, une différence entre $Sc,p_r$ et $Sréf,p_r$ induit une erreur (mauvaise traduction) dans l'évaluation de $Z'_r$, et $Z'_r$ n'est donc pas compréhensible par l'instruction suivante. On peut donc détecter une erreur de branchement même si la signature a été évaluée avec l'identifiant correct correspondant au branchement cohérent avec le résultat du test effectué lors de l'instruction de test correspondante.

Selon un autre perfectionnement important du procédé selon l'invention, étant donné que l'ensemble des signatures de référence de chaque réplique peut avoir une taille prohibitive, on peut recourir à une technique de justification de signature. Ceci a pour effet de transformer l'ensemble des signatures de référence pour une réplique donnée en un singleton. Une technique classique de justification est décrite par exemple dans l'article intitulé "Concurrent Error Detection Using Watchdog Processors - A Survey" paru dans IEEE Transactions on Computers, Vol. 37, N°2, Février 1988, pages 160 à 174. On ne décrira donc pas cette technique plus en détails ici.

La justification de signature peut en outre s'appliquer au cas des boucles, c'est-à-dire au cas des ensembles d'instructions réitérés plusieurs fois de suite. Puisque l'on connaît en général à la compilation le nombre maximal possible $i_{max}$ d'itérations de chaque boucle, on peut transformer chaque boucle en une boucle qui possède exactement $i_{max}$ itérations, et ce en rajoutant au corps initial de la boucle une dérivation qui fonctionnellement n'a pas d'effet. Grâce à la justification, les différents chemins possibles dans le corps de la boucle ont alors même signature partielle.

Bien entendu, pour le calcul des signatures, lorsque le nombre de bits nécessaire à la représentation binaire des identifiants élémentaires n'est pas suffisant pour effectuer le décalage souhaité, les bits de rang le plus élevé (ou de rang le plus faible) qui se trouveraient éventuellement en dehors de la zone disponible, sont remplacés au niveau des bits de rang le plus faible (ou de rang le plus élevé), ce qui revient à effectuer une permutation circulaire sur les représentations binaires des identifiants élémentaires.

Enfin, on pourra remplacer tout moyen par un moyen équivalent, et en particulier toute méthode de codage par une méthode équivalente, sans sortir du cadre de l'invention.

**Revendications**

1. Procédé de détection des erreurs d'exécution d'un logiciel répliqué, c'est-à-dire dont plusieurs répliques identiques, auxquelles sont fournies les mêmes données d'entrée, sont exécutées en parallèle ou séquentiellement, ledit logiciel comprenant des instructions reliées entre elles par des branchements et constituées :

   - soit d'opérations mettant en jeu un opérateur, dit simple, agissant sur des opérandes, dits simples, afin de mettre à jour le contenu d'une variable, lesdits opérandes étant constitués soit de données d'entrée, soit de résultats obtenus par exécution d'autres instructions,
   - soit de tests conditionnels dont le résultat sert à déterminer l'instruction suivante à exécuter,
   - soit d'indications de destination donnant directement l'instruction suivante à exécuter,
   ledit procédé étant caractérisé en ce que chacune desdites instructions d'opération, au sein de chaque réplique, est remplacée par plusieurs instructions dites de détection d'erreur permettant d'effectuer successivement :
   - le codage préalable des opérandes mis en jeu dans ladite instruction d'opération et constitués de données d'entrée, au moyen d'une injection dite de codage spécifique de ladite instruction d'opération, pour obtenir des données d'entrée dites codées images desdites données d'entrée simples par ladite injection, chaque injection de codage, associée à l'une desdites répliques et à une instruction d'opération donnée au sein de cette réplique, étant distincte des injections de codage associées à toutes les autres instructions d'opération au sein de toutes les autres répliques,
   - la transformation dudit opérateur simple associé à ladite instruction d'opération, de sorte que l'opérateur appliqué aux opérandes, codés, de ladite instruction résulte de la transformation dudit opérateur simple, les transformations correspondant à des opérateurs identiques au sein des différentes répliques étant deux à deux distinctes,
   - le transcodage du résultat obtenu par application dudit opérateur transformé auxdites opérandes codés, pour obtenir un résultat dit transcodé sous la forme d'un opérande codé au moyen du codage spécifique de l'instruction d'opération destinée à utiliser ledit résultat, ledit transcodage étant effectué au moyen d'une transformation dite de transcodage, chaque transformation de transcodage, associée à l'une desdites répliques et à une instruction d'opération donnée au sein de cette réplique étant distincte des transformations de transcodage associées à toutes les autres instructions d'opération au sein de toutes les autres répliques,
   ledit procédé étant en outre caractérisé en ce qu'il comprend une opération finale de décodage du résultat, dit final, obtenu en fin d'exécution de chaque réplique, au moyen de l'inverse de l'injection dite de décodage spécifique définie ci-dessus, chaque injection de décodage, spécifique de l'une desdites répliques, étant distincte des injections de décodage des autres répliques, et en ce qu'il indique qu'une erreur d'exécution s'est produite si, pour certaines desdites répliques, ledit résultat final ne peut être décodé au moyen de ladite injection inverse correspondante, et si, parmi les résultats finaux décodés des autres répliques, il n'en existe pas un, éventuellement appelé alors résultat final sélectionné, qui est obtenu par un nombre minimum prédéterminé desdites autres répliques.

2. Procédé selon la revendication 1 caractérisé en ce qu'il consiste en outre à :

   - déterminer, lors de la compilation de chacune desdites répliques, une donnée de référence, appelée signature de référence, pour chaque parcours autorisé au sein de ladite réplique, par combinaison de constantes numériques appelées identifiants élémentaires prédéterminés et associés à chaque instruction de test et à chaque instruction de destination, lesdites signatures de référence étant mises en mémoire,
   - calculer, au moyen d'instructions supplémentaires insérées au sein de chacune desdites répliques, la valeur d'une variable, appelée signature courante, représentative de la suite des instructions de test et de destination effectuées lors de l'exécution, par combinaison de valeurs numériques appelées identifiants élémentaires d'exécution et associées à chacune des instructions de destination et de test exécutées,
   les combinaisons effectuées au sein d'une même réplique pour la détermination et pour le calcul respectivement desdites signatures de référence et courante étant identiques, et distinctes deux à deux d'une réplique à l'autre au moyen d'un paramétrage adapté,
   ledit procédé étant en outre caractérisé en ce que, lorsqu'il existe un résultat final sélectionné, les signatures courantes des répliques ayant fourni ledit résultat final sélectionné sont comparées aux signatures de réfé-

EP 0 606 803 B1

rence correspondantes, et si chacune desdites signatures courantes n'est pas égale à l'une desdites signatures de référence de la réplique correspondante, ledit procédé consiste alors à indiquer qu'une erreur s'est produite.

3. Procédé selon la revendication 2 caractérisé en ce que, pour une instruction d'opération suivant une instruction de test, ladite transformation associée à l'opérateur correspondant est fonction de la différence entre les signatures courante et de référence partielles du parcours exécuté jusqu'à ladite instruction de test.

4. Procédé selon l'une des revendications 1 ou 2 caractérisé en ce que la fonction de transformation de chacun desdits opérateurs est composée avec la transformation de transcodage de l'instruction d'opération précédente pour constituer une seule fonction.

5. Procédé selon l'une des revendications 1 à 4 caractérisé en ce que lesdites injections de codage sont des fonctions affines dont l'ordonnée à l'origine et la pente sont différentes d'une réplique à l'autre.

6. Procédé selon l'une des revendications 1 à 5 caractérisé en ce que, lorsque l'opération est une addition ou une soustraction, l'opérateur transformé correspondant est respectivement une addition ou une soustraction, c'est-à-dire que la transformation utilisée pour transformer l'opérateur est l'identité.

7. Procédé selon l'une des revendications 2 à 6 caractérisé en ce que, pour déterminer ou calculer lesdites signatures de référence ou courantes, on additionne les représentations binaires desdits identifiants élémentaires en les ayant préalablement multipliées chacune par une puissance de deux choisie arbitrairement, ladite puissance de deux étant fonction du numéro d'ordre de l'instruction correspondante et les ensembles de puissances de deux utilisés au sein de chaque réplique étant deux à deux distincts.

8. Procédé selon l'une des revendications 2 à 7 caractérisé en ce que l'identifiant élémentaire d'exécution d'une instruction de test est calculé en fonction de la variable faisant l'objet de la condition de ladite instruction de test, et de constantes prédéterminées, de sorte que, si l'instruction à laquelle correspond ledit identifiant est exécutée correctement, il est égal à l'identifiant élémentaire prédéterminé affecté à cette instruction.

9. Procédé selon la revendication 8 caractérisé en ce que ladite variable faisant l'objet de ladite condition de ladite instruction de test est codée au moyen d'un codage spécifique fonction de la variable prévue pour ledit test, avant d'être utilisée pour le calcul dudit identifiant élémentaire d'exécution.

10. Procédé selon l'une des revendications 2 à 9 caractérisé en ce que les identifiants élémentaires d'exécution desdites instructions de destination sont calculés par une instruction supplémentaire suivant chaque instruction de destination et affectant à l'identifiant élémentaire d'exécution une constante prédéterminée égale à l'identifiant élémentaire prédéterminé correspondant.

**Patentansprüche**

1. Verfahren zur Fehlererfassung bei der Ausführung eines replizierten Programms, d.h. eines Programms, bei dem mehrere identische Repliken, denen die gleichen Eingangsdaten zugeführt werden, parallel oder sequentiell durchlaufen werden, wobei das Programm Befehle enthält, die miteinander über Verzweigungen verbunden sind und bestehen aus:

- entweder Operationsbefehlen, die einen sogenannten einfachen Operator verwenden, der sogenannte einfache Operanden verknüpft, um den Inhalt einer Variablen zu ermitteln, wobei die Operanden entweder aus Eingangsdaten oder aus Ergebnissen bestehen, die bei der Ausführung anderer Befehle erhalten wurden,
- oder bedingten Sprungbefehlen, deren Ergebnis dazu dient, den nächsten auszuführenden Befehl zu bestimmen,
- oder unbedingten Sprungbefehlen, die unmittelbar den nächsten auszuführenden Befehl angeben,

dadurch gekennzeichnet, daß jeder Operationsbefehl in jeder Replik durch mehrere Fehlererkennungsbefehle ersetzt wird, durch die nacheinander erreicht wird:

- zuerst die Kodierung der in dem Operationsbefehl wirksamen und von Eingangsdaten gebildeten Operanden mit Hilfe einer spezifischen Kodierinjektion des Operationsbefehls, um kodierte Eingangsinformationen zu erhalten, die eine Abbildung der einfachen Eingangsdaten über die Injektion darstellen, wobei jede Kodierinjektion in Verbindung mit einer der Repliken und einem gegebenen Operationsbefehl in dieser Replik sich von den Kodierinjektionen unterscheidet, die allen anderen Operationsbefehlen in allen anderen Repliken zugeordnet sind,

- die Transformation des dem Operationsbefehl zugeordneten einfachen Operators derart, daß der auf die kodierten Operanden angewendete Operator des Befehls aus der Transformation des einfachen Operators resultiert, wobei die Transformationen entsprechend identischen Operatoren in den verschiedenen Repliken paarweise unterschiedlich sind,

- die Transkodierung des durch Anwendung des transformierten Operators auf die kodierten Operanden erhaltenen Ergebnisses, so daß sich ein transkodiertes Ergebnis in Form eines kodierten Operanden mit Hilfe der spezifischen Kodierung des Operationsbefehls ergibt, der dieses Ergebnis weiterverwenden soll, wobei die Transkodierung mit Hilfe einer Transkodiertransformation erreicht wird und jede Transkodiertransformation einer der Repliken und eines gegebenen Operationsbefehls innerhalb dieser Replik sich von den Transkodierinformationen unterscheidet, die allen anderen Operationsbefehlen innerhalb aller anderen Repliken zugeordnet sind,

und daß das Verfahren weiter eine abschließende Operation der Dekodierung des endgültigen Ergebnisses enthält, das nach Ausführung aller Repliken erhalten wird, und zwar durch die inverse Funktion der spezifischen oben definierten Dekodierinjektion, wobei jede Dekodierinjektion, die für eine der Repliken spezifisch ist, sich von den Dekodierinjektionen der anderen Repliken unterscheidet, und daß ein Ausführungsfehler gemeldet wird, wenn für bestimmte der Repliken das endgültige Ergebnis nicht mit Hilfe der entsprechenden inversen Injektion dekodiert werden kann und wenn unter den dekodierten endgültigen Ergebnissen der anderen Repliken nicht ein Ergebnis existiert, das ggf. dann ausgewähltes endgültiges Ergebnis genannt wird und durch eine vorbestimmte Mindestanzahl der Repliken erzielt wurde.

2. Verfahren nach Anspruch 1, dadurch gekennzeichnet, daß es weiter darin besteht,

- beim Entwurf jeder der Repliken eine Bezugsangabe, BezugsSignatur genannt, für jeden zugelassenen Verlauf innerhalb der Replik durch Kombination von Zahlenkonstanten, die vorbestimmte Elementaridentifizierer genannt werden und jedem bedingten und unbedingten Sprungbefehl zugeordnet sind, zu bestimmen, wobei die Bezugssignaturen abgespeichert werden,

- mit Hilfe von zusätzlichen Befehlen, die in jede der Repliken eingefügt werden, den Wert einer Variablen, laufende Signatur genannt, zu berechnen, die für die Folge von bedingten und unbedingten Sprungbefehlen während der Ausführungen repräsentativ ist, wobei die Berechnung durch Kombination von Zahlenwerten erfolgt, die Elementaridentifizierer der Ausführung genannt werden und jedem der bedingten und unbedingten Sprungbefehle zugeordnet sind, wobei die Kombinationen innerhalb einer gegebenen Replik für die Bestimmung und die Berechnung der Bezugssignatur bzw. der laufenden Signatur identisch und paarweise von einer Replik zur nächsten durch eine geeignete Parametrierung unterschiedlich sind, wobei das Verfahren weiter dadurch gekennzeichnet ist, daß, wenn ein ausgewähltes endgültiges Ergebnis existiert, die laufenden Signaturen der Repliken, die das ausgewählte endgültige Ergebnis geliefert haben, mit den entsprechenden Bezugssignaturen verglichen werden, worauf, wenn nicht alle laufenden Signaturen einer der Bezugssignaturen der betreffenden Replik gleichen, das Verfahren darin besteht, einen Fehler zu melden.

3. Verfahren nach Anspruch 2, dadurch gekennzeichnet, daß für einen Operationsbefehl, der auf einen bedingten Sprungbefehl folgt, die dem entsprechenden Operator zugeordnete Transformation von dem Unterschied zwischen der laufenden partiellen Signatur und der partiellen Bezugssignatur des durchgeführten Verlaufs bis zu diesem Sprungbefehl abhängt.

4. Verfahren nach einem der Ansprüche 1 oder 2, dadurch gekennzeichnet, daß die Transformation jedes Operators mit der Transkodiertransformation des vorhergehenden Operationsbefehls zu einer gemeinsamen Funktion kombiniert ist.

5. Verfahren nach einem der Ansprüche 1 bis 4, dadurch gekennzeichnet, daß die Kodierinjektionen affine Funktionen sind, deren Ursprungsordinaten und Steigung sich von einer Replik zur anderen unterscheiden.

6. Verfahren nach einem der Ansprüche 1 bis 5, dadurch gekennzeichnet, daß der transformierte Operator, wenn es sich um eine Additions- oder Subtraktionsoperation handelt, eine Addition oder eine Subtraktion ist, d.h. daß die verwendete Transformation für den Operator eine Identität ist.

**7.** Verfahren nach einem der Ansprüche 2 bis 6, dadurch gekennzeichnet, daß zur Bestimmung und Berechnung der Bezugssignatur oder der laufenden Signatur die binären Darstellungen der Elementaridentifizierer addiert werden, nachdem sie vorher je mit einer frei gewählten Potenz von 2 multipliziert werden, die von der Nummer des entsprechenden Befehls abhängt, wobei die verwendete Gesamtheit von Potenzen von 2 in jeder Replik paarweise unterschiedlich ist.

**8.** Verfahren nach einem der Ansprüche 2 bis 7, dadurch gekennzeichnet, daß der Elementaridentifizierer der Ausführung eines bedingten Sprungbefehls abhängig von der Variablen, die zur Sprungbedingung dieses Befehls gehört, und von vorbestimmten Konstanten berechnet wird, so daß, wenn der Befehl, dem der Identifizierer entspricht, korrekt ausgeführt wird, der Elementaridentifizierer dem diesem Befehl zugewiesenen vorbestimmten Elementaridentifizierer gleicht.

**9.** Verfahren nach Anspruch 8, dadurch gekennzeichnet, daß die Variable, die zu dem bedingten Sprungbefehl gehört, durch eine spezielle Kodierung kodiert wird, die von der für die Sprungbedingung vorgesehenen Variablen abhängt, ehe sie für die Berechnung des Elementaridentifizierers der Ausführung verwendet wird.

**10.** Verfahren nach einem der Ansprüche 2 bis 9, dadurch gekennzeichnet, daß die Elementaridentifizierer der Ausführung der unbedingten Sprungbefehle durch einen zusätzlichen Befehl berechnet werden, der auf jeden unbedingten Sprungbefehl folgt und dem Elementaridentifizierer der Ausführung eine vorbestimmte Konstante gleich dem entsprechenden vorbestimmten Elementaridentifizierer zuordnet.

## Claims

**1.** A method of detecting execution errors in replicated software, i.e. software of which there are a plurality of identical replicas to which the same input data is supplied, and which are executed in parallel or sequentially, said software containing instructions interconnected by branches and constituted by:

operations involving a "simple" operator acting on "simple" operands so as to update the contents of a variable, said operands being constituted either by input data or by results obtained by executing other instructions; conditional tests whose results serve to determine the respective following instructions to be executed; or destination indications directly giving the respective following instructions to be executed; said method being characterized in that each of said operation instructions, in each replica, is replaced with a plurality of "error detection" instructions making it possible to perform the following successively: pre-encoding the operands involved in said operation instruction and constituted by input data by means of a "specific encoding" injection that is specific to said operation instruction, so as to obtain "encoded" input data that is the image of said simple input data by means of said injection, each encoding injection, associated with one of said replicas and with a given operation instruction in said replica, being distinct from the encoding injections associated with all of the other operation instructions in all of the other replicas; transforming said simple operator associated with said operation instruction, so that the operator applied to the encoded operands of said instruction results from transforming said simple operator, the transformations corresponding to identical operators in the various replicas being distinct in pairs; and transcoding the result obtained by applying said transformed operator to said encoded operands, to obtain a "transcoded" result in the form of an operand encoded by means of the specific encoding of the operation instruction that is to use said result, said transcoding being performed by means of a "transcoding" transformation, each transcoding transformation, associated with one of said replicas and with a given operation instruction in said replica being distinct from the transcoding transformations associated with all of the other operation instructions in all of the other replicas; said method further being characterized in that it includes a final operation for decoding the "final" result obtained at the end of execution of each replica, by means of the inverse of the above-defined specific encoding injection, each decoding injection, specific to a respective one of said replicas, being distinct from the decoding injections of the other replicas, and in that it indicates that an execution error has occurred if, for certain replicas, said final result cannot be decoded by means of the corresponding inverse injection, and if, among the decoded final results of the other replicas, there is not one, optionally then referred to as the "selected final result", that is obtained by a predetermined minimum number of said other replicas.

**2.** A method according to claim 1, characterized in that it further consists in:

determining reference data, referred to as a "reference signature", during compilation of each of said replicas, for each permitted path through the replica, by combining numerical constants referred to as "predetermined elementary identifiers" and associated with each test instruction and with each destination instruction, said reference signatures being stored in a memory; and

calculating, by means of additional instructions inserted in each of said replicas, the value of a variable referred to as a "current signature", representative of the succession of test and destination instructions performed during execution, by combining numerical values referred to as "execution elementary identifiers" and associated with each of the destination instructions and test instructions performed;

the combinations performed in the same replica for determining and for calculating respectively said reference signature and said current signature being identical, and distinct in pairs from one replica to another by means of suitable parameterizing;

said method further being characterized in that, when a selected final result exists, the current signatures of the replicas that have supplied said selected final result are compared with the corresponding reference signatures, and if each of said current signatures is not equal to one of said reference signatures of the corresponding replica, said method then consists in indicating whether an error has occurred.

3. A method according to claim 2, characterized in that, for an operation instruction following a test instruction, said transformation associated with the corresponding operator is a function of the difference between the partial current signature and the partial reference signature of the path executed up to said test instruction.

4. A method according to claim 1 or 2, characterized in that the function for transforming each of said operators is composed with the transcoding transformation of the preceding operation to constitute a single function.

5. A method according to any one of claims 1 to 4, characterized in that said encoding injections are affine functions whose ordinate at the origin and whose slope differ from one replica to another.

6. A method according to any one of claims 1 to 5, characterized in that, when the operation is an addition or a subtraction, the corresponding transformed operator is respectively an addition or a subtraction, i.e. the transformation used to transform the operator is identity.

7. A method according to any one of claims 2 to 6, characterized in that, to determine or calculate said reference signatures or current signatures, the binary representations of said elementary identifiers are added together after each of them has been multiplied by an arbitrarily chosen power of two, said power of two being a function of the order number of the corresponding instruction and the sets of powers of two used in each replica being distinct in pairs.

8. A method according to any one of claims 2 to 7, characterized in that the execution elementary identifier of a test instruction is calculated as a function of the variable which is the subject of the condition of said test instruction, and of predetermined constants, so that, if the instruction to which said identifier corresponds is executed correctly, it is equal to the predetermined elementary identifier allocated to said instruction.

9. A method according to claim 8, characterized in that said variable which is the subject of said condition of said test instruction is encoded by means of specific encoding which is a function of the variable specified for said test, before it is used for calculating said execution elementary identifier.

10. A method according to any one of claims 2 to 9, characterized in that the execution elementary identifiers of said destination instructions are calculated by an additional instruction following each destination instruction, and allocating a predetermined constant equal to the corresponding predetermined elementary identifier to the execution elementary identifier.